(19) Europäisches Patentamt / European Patent Office / Office européen des brevets

(11) **EP 2 207 702 B1**

(12) **EUROPEAN PATENT SPECIFICATION**

(45) Date of publication and mention
of the grant of the patent:
**20.07.2011 Bulletin 2011/29**

(21) Application number: **08803843.5**

(22) Date of filing: **08.09.2008**

(51) Int Cl.:
***B60R 21/264*** *(2006.01)*

(86) International application number:
**PCT/EP2008/061875**

(87) International publication number:
**WO 2009/043690 (09.04.2009 Gazette 2009/15)**

(54) **GAS GENERATOR IN WHICH THE DIFFUSION CHAMBER IS FITTED WITH AN INTERNAL CONDUIT**

GASGENERATOR, IN DEM DIE DIFFUSIONSKAMMER MIT EINEM INTERNEN KANAL VERSEHEN IST

GÉNÉRATEUR DE GAZ COMPRENANT UNE CHAMBRE DE DIFFUSION ÉQUIPÉE D'UN CONDUIT INTERNE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **03.10.2007 FR 0706915**

(43) Date of publication of application:
**21.07.2010 Bulletin 2010/29**

(73) Proprietor: **Autoliv Development AB**
**447 83 Vårgårda (SE)**

(72) Inventors:
• **LE PEN, Eric**
**F-29000 Quimper (FR)**

• **RICHTER, Ludovic**
**F-29590 QUIMERC'H (FR)**

(74) Representative: **Branger, Jean-Yves**
**Cabinet Régimbeau,**
**Espace Performance**
**Bâtiment K**
**35769 Saint-Gregoire-Cedex (FR)**

(56) References cited:
**EP-A- 0 943 502     EP-A- 1 568 550**
**FR-A- 2 855 769     FR-A- 2 890 022**
**US-A- 5 219 178**

**Description**

The present invention concerns a pyrotechnical gas generator intended for motor vehicle safety.

One application for said generator concerns safety restraint systems of protective cushion type, called airbags.

Said generators generally consist of at least one sealed combustion chamber which contains a pyrotechnic charge whose mass is proportional to the volume of the bag to be inflated.

An initiator, generally of electric type, and after heating of its electric circuit under Joule effect on passing of a current, releases particles and hot gases into the combustion chamber enabling ignition of the pyrotechnic materials.

To optimise the performance of the restraint system, it is possible to distribute the pyrotechnic charge of the gas generator in several independent chambers of similar structure to the one described above.

Document FR-A-2 760 710 describes this type of generator.

More precisely, it comprises a tubular casing closed at its ends and interiorly subdivided by two partitions which delimit three contiguous chambers i.e. two combustion chambers each containing a pyrotechnic charge, arranged longitudinally either side of a diffusion chamber communicating with at least one gas outlet arranged in the wall of the casing, these partitions being crossed by at least one longitudinal orifice forming a nozzle allowing controlled passing of the hot gases, generated by the combustion of said pyrotechnic charge, from the combustion chambers towards the diffusion chamber, these gases then being able to escape via said gas outlet, in particular to inflate an inflatable safety cushion.

The term adaptive generator is used, since it allows independent functioning of the combustion chambers, and therefore provides more flexibility in terms of bag inflation.

The major drawback with conventional adaptive generators is their high cost.

Each combustion chamber fitted with a conventional ignition system effectively contains costly components, such as the initiator and its holder. Also said generator requires dual cabling for ignition of the two initiators.

Generators have already been proposed with multiple combustion chambers and pyrotechnic charges but having a single initiator.

Document FR-A-2 877 428 describes said structure.

The combustion chambers are arranged at each end of the generator and are separated by a diffusion chamber. One of the chambers, in this case the larger chamber, contains the initiator. Ignition of the second chamber is achieved by means of combustion gases escaping from the first chamber. More precisely, the gases come to attack the rupture disk which seals the orifice forming a nozzle leading into the second combustion chamber. Since this nozzle is of conical shape, the gases are focused into a second chamber and initiate the charge contained therein.

Said device requires improvement since it is ascertained that its behaviour when in operation is aggressive for the generator with high energy release followed by a drop in rate of functioning.

Document FR-A-2 890 022, which comprises the features mentioned in the preamble of claim 1, relates to a generator comprising a combustion chamber and a so-called "buffer" reserve. This reserve communicates with the combustion chamber and comprises an orifice sealed by a rupture disk which communicates with a diffusion chamber. After ignition, this reserve allows temporary storage of the combustion gases.

When the pressure in this reserve reaches a preset threshold, the rupture disk breaks and the stored gases are released.

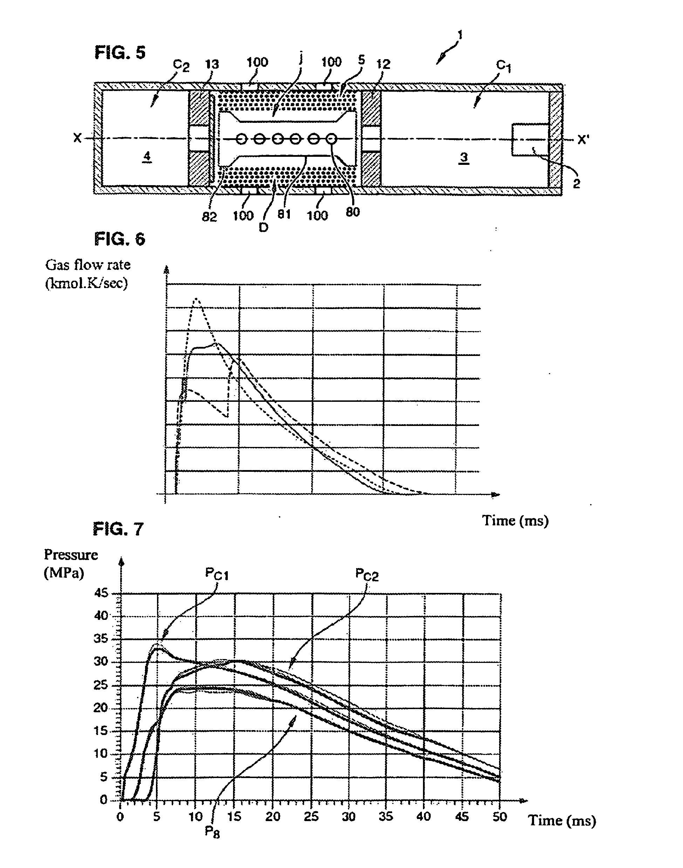

In the variant of embodiment shown figure 7, the generator comprises a second combustion chamber. These combustion chambers share the same diffusion chamber. In this case, the buffer reserve comprises another orifice sealed by a rupture disk which communicates with a second combustion chamber. Ignition of the second chamber is only obtained after rupture of the disk.

In document US-A-2005/0098988 a tubular generator is described comprising two combustion chambers. Each combustion chamber contains an initiator. They both share the same diffuser chamber. This latter chamber comprises at least one exit orifice. Each combustion chamber comprises at least one orifice forming a nozzle. In relation to the ignition sequence of the two chambers, combustion is piloted either by the nozzles or by the exit orifices.

Said generator suffers from the same drawbacks as the first above-described generator, owing to the presence of two initiators.

The present invention therefore sets out to solve these problems by providing a generator of simple structure, in which the combustion of the charges of the two combustion chambers is piloted efficiently and progressively.

The invention therefore concerns a pyrotechnic gas generator for motor vehicle safety, comprising a tubular casing closed at its ends and interiorly subdivided by two partitions which delimit three contiguous chambers, namely a first and a second combustion chamber each containing at least one pyrotechnic charge, arranged longitudinally either side of a diffusion chamber communicating with at least one gas outlet arranged in the wall of the casing, a filtering material being arranged in this chamber at least opposite said gas outlet, at least one longitudinal orifice forming a nozzle passing through these partitions which allows controlled passing of the hot gases generated by combustion of said pyrotechnic charge from the combustion chambers towards the diffusion chamber, these gases then being able to escape from the diffusion chamber via said gas outlet, in particular to inflate an inflatable safety cushion, only the first of said combustion chambers being provided with means to initiate said pyrotechnic charge contained therein.

According to the invention, this generator is characterized by the fact that:

- said diffusion chamber houses a tubular duct whose opposite ends communicate with said nozzle-forming longitudinal orifices, the wall of this duct itself having at least one nozzle-forming orifice, which is never sealed, placing its inner space in communication with the inner space of the diffusion chamber, and which lies opposite said filtering material;
- the nozzle which separates the first combustion chamber from the diffusion chamber is sealed, on the combustion chamber side, by a rupture disk which yields over and above a first predefined pressure value in this combustion chamber;

- the nozzle which separates the diffusion chamber from the second combustion chamber is sealed, on the diffusion chamber side, by a rupture disk which yields over and above a second predefined pressure value in said tubular duct, this second value being greater than the first value;
- the surface areas of said nozzles are sized so that the nozzle of said duct pilots the combustion of the charge contained in said second combustion chamber, when said rupture disks have yielded.

By means of this set of characteristics the duct is able to focus the gases leaving the first combustion chamber towards the rupture disk of the second combustion chamber, whilst enabling the exit of part of these gases to inflate the safety cushion immediately. When the combustion of the charge in the second combustion chamber has been initiated, this combustion is then piloted by the duct nozzles.

According to other advantageous, non-limiting characteristics:

- the respective surface areas of the nozzle-forming orifices meet the following mathematical formula:

$$S1 < S3 < S1 + S2,$$

in which:

- S1 is the surface area of the nozzle-forming orifice which separates the first combustion chamber from the diffusion chamber;
- S2 is the surface area of the nozzle-forming orifice which separates the diffusion chamber from the second combustion chamber;
- S3 is the surface area of the nozzle-forming orifice of said tubular duct;
- said partitions are each crossed by a single, longitudinal, nozzle-forming orifice, and the section of said tubular duct is slightly greater than the section of said orifices;
- there is a clearance between said nozzle-forming orifice of said tubular duct and said filtering material;
- said filtering material is in the form of a tubular sleeve, and said duct is force-fitted into said sleeve.

Other characteristics and advantages of the present invention will become apparent on reading the following description of a preferred embodiment. This description is given with reference to the appended drawings in which:

- figure 1 is an extremely simplified longitudinal, sectional view of a generator conforming to the invention;
- figures 2 to 4 are similar views to figure 1, intended to illustrate three functioning steps of the generator;
- figure 5 is a similar view to figure 1 of a variant of embodiment of the generator;
- figures 6 and 7 are time curves respectively showing the progression of inflation for an airbag connected to said generator, and the changes in pressure in each of the chambers.

In the entirety of the present application, "nozzle-forming orifice" and "nozzle" will be used to designate the same item.

Similarly, by the expression "to pilot combustion" is meant the maintaining of sufficient pressure in a combustion chamber to give regular support to this combustion.

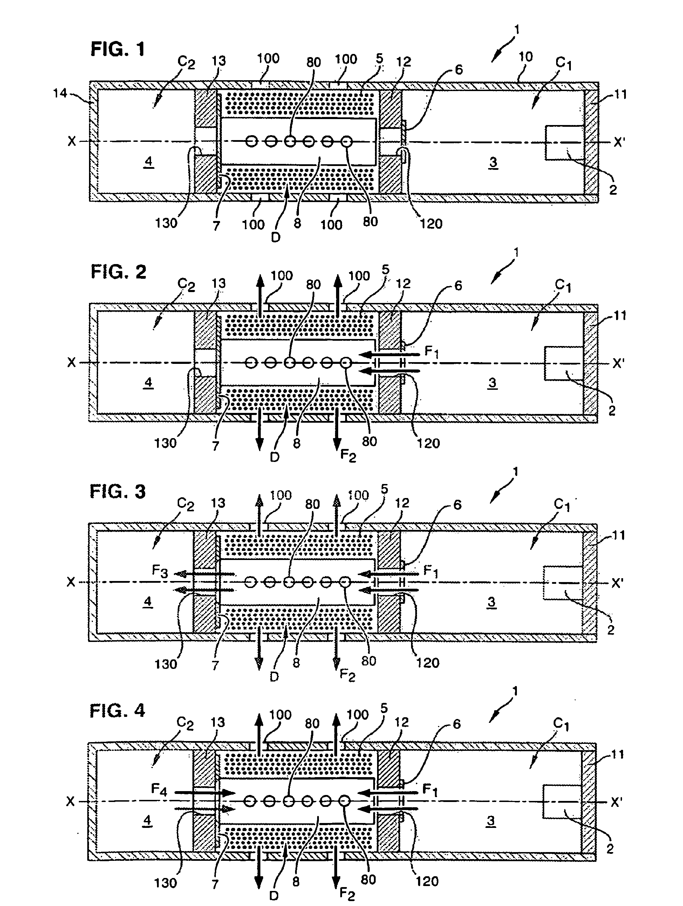

The pyrotechnic gas generator illustrated figures 1 to 4 has a generally known structure. It comprises a tubular casing 1, of cylindrical shape and of longitudinal axis X-X', whose wall 10 is open at one end, whilst the opposite end consists of a bottom part 14 forming part of said wall.

The first end is sealed by a ring of general disk shape 11. An annular rim extending inwardly which is not shown in the figure for simplification purposes, ensures locking of the wall 10 onto the ring 11.

Similarly, in the central part of the casing, the wall 10 is stamped onto two parallel, disk-shaped, transverse partitions, referenced 12 and 13.

In their central part, the partitions 12 and 13 are crossed by an orifice 120 and 130 respectively, forming a nozzle, which will be further described below.

The partitions 12, 13 are of constant thickness.

The casing 1, ring 11 and the partitions 12, 13 are conventionally made of a metal with high mechanical and thermal resistance.

The casing 1 is nevertheless made in a metal which has sufficient ductility to allow crimping.

The partitions 12 and 13 divide the inside of the casing 1 into three chambers, namely two so-called combustion chambers $C_1$ and $C_2$ and a third chamber D called a diffusion or pacification chamber.

The chambers $C_1$ and $C_2$ flank chamber D which therefore occupies a median position.

The generator comprises an electro-pyrotechnic initiator 2, which is associated with a pyrotechnic charge 3, this initiator and this charge both lying in combustion chamber $C_1$ called the first chamber and shown on the right side of figure 1.

The charge 3, not shown, is in shape of an annular sleeve for example, of general cylindrical shape, and is press-fitted with little clearance inside the wall 10 of the casing.

In one variant of embodiment, this charge may be a powder, or pellets, of a pyrotechnic composition.

The second chamber $C_2$, which extends longitudinally (along the X-X' axis) opposite the first, is of relatively similar structure. It is of shorter length and does not contain an initiator. The charge 4 it contains is in the shape of annular sleeve for example of general cylindrical shape. This charge is identical or different in type to the charge contained in chamber $C_1$.

As mentioned above, the partitions 12 and 13 separate the three chambers, two-by-two.

Therefore partition 12 ensures the separation between the first combustion chamber $C_1$ and the diffusion chamber D.

A nozzle-forming orifice 120 passes through it, of constant section, which takes up a central position aligned with the X-X' axis.

This nozzle is sealed by a rupture disk 6 which is positioned on the face of the partition 12 facing the inside of the first combustion chamber $C_1$.

This structure, a rupture disk generally in the form of a thin sheet of metallic material, isolates the combustion chamber from the remainder of the generator when no demand is placed upon it.

The partition 13, which separates the diffusion chamber from the second combustion chamber $C_2$, also has a nozzle-forming orifice 130. This orifice, in the embodiment illustrated, lies exactly opposite the nozzle 120 of partition 12.

Nozzle 130, like nozzle 120, is sealed by a rupture disk 7. This disk lies against the face of the partition 13 located in the pacification chamber D.

This diffusion chamber D is delimited firstly by the two partitions 12 and 13, and secondly by the corresponding area of wall 10.

In manner known *per se* this area is pierced with one or more series of gas exit holes 100, so that the gases generated within the present generator are able to escape outwardly to inflate a safety airbag cushion (not shown).

In manner also known *per se,* the inside of the diffusion chamber is lined with a filtering material 5 which consists for example of a close-knit network of steel wire. The function of this material is to cool and filter the gases, and thereby to reduce jet rates leaving the generator.

According to one characteristic of the invention, the diffusion chamber D houses a tubular duct 8 whose opposite end communicate with nozzles 120 and 130, the wall of this duct itself having at least one nozzle-forming orifice 80 which is never sealed causing its inner space to communicate with the inner space of the diffusion chamber D, and faces said filtering material 5.

In the illustrated example the orifices 80 are at least six in number and are aligned along the longitudinal axis X-X'.

This tubular duct 8 is preferably assembled under compression between the walls 12 and 13 to ensure a perfect seal therebetween.

Also, a clearance is preferably necessary between the outer wall of the duct 8 and the filtering material 5 lining the inside of the diffusion chamber.

According to the invention, and as is explained further on, the surface areas of the nozzles 120, 130 and 80 are sized so that nozzle 80 of duct 8 pilots the combustion of the charge 4 which is contained in the second combustion chamber $C_2$ when the rupture disks 6 and 7 have ruptured.

Advantageously, the respective surface areas of these nozzles meet the following mathematical formula:

$$S1 < S3 < S1 + S2,$$

in which:

- S1 is the surface area of nozzle 120 which separates the first combustion chamber $C_1$ from the diffusion chamber D;
- S2 is the surface area of nozzle 130 which separates the diffusion chamber D from the second combustion chamber $C_2$;
- S3 is the surface area of nozzle 80 of said tubular duct 8.

The functioning of said generator is as follows:

Before ignition of the initiator 2, the generator lies in the configuration shown figure 1, which means that the rupture disks 6 and 7 of partitions 12 and 13 are intact and isolate the three chambers two-by-two.

When combustion of the initiator is triggered, it propagates to the pyrotechnic charge 3 contained in combustion chamber $C_1$, resulting in a gradual increase in the gas pressure therein.

The rupture disk 6, which up until this time has sealed the chamber, finally ruptures over and above a predetermined pressure, so that the gases generated by combustion of the charge 3 quickly enter the duct 8 in the form of a flow F1 (see figure 2).

Owing to its reduced volume, the duct 8 channels the gas flow F1 towards the rupture disk 7 sealing chamber $C_1$, until this disk ruptures under thermomechanical attack and the gases can then ignite the propellant contained in this second chamber.

In parallel, some of the gases are able to escape via the nozzles 80 of the duct 8.

They are then filtered and slowed by the material 5 and escape outwardly via the outlets 100. This is the situation in figure 3 in which these two flows are referenced $F_2$ and $F_3$.

Finally, when the charge 4 in chamber $C_2$ has started to combust, the gases thus generated escape from said chamber in the form of a flow $F_4$ which passes through nozzle 130, enters duct 8 and escapes therefrom via nozzles 80.

Having regard to the mathematical formula given above, the combustion of the charge contained in chamber $C_2$ is piloted by the nozzles 80 of the duct 8.

By way of indication, the following ratios of throughway sections allow a sufficient rise in pressure to maintain combustion of the charge contained in combustion chamber $C_2$:

$$S1 = 54 \text{ mm}^2; \; S3 = 75 \text{ mm}^2; \; S1 + S2 = 84 \text{ mm}^2$$

Therefore, piloting of the generator as a whole is ensured by the duct 8 and not by the nozzles 120 and 130, which at all events only fulfil their role for the first combustion chamber $C_1$ and during the initial functioning stage.

A first operating rate is set up subsequent to ignition of the main chamber $C_1$, controlled by nozzle 120. However, the criterion "S2 greater than S1" allows some gases to be evacuated for immediate filling of the bag.

In parallel, the reduced volume of the duct 8, and surface area value S3 enable the gases to be channelled towards the rupture disk of the second chamber $C_2$ in order to rupture this disk under thermomechanical forces and to initiate the propellant contained therein.

The initial pressure in the tube guarantees reproducible ignition from -35°C to +85°C.

The quantity of additional gases produced causes overpressure within the tube, controlled by section S3, which equilibrates with the pressure in the second chamber $C_2$ to maintain combustion.

The second operating rate is then reached and piloting of chambers $C_1$ and $C_2$ is modified by the pressure level reached in the duct (placing in communication of the combustion chambers, unlike the generator having two ignitions).

In the embodiment shown figure 5, the shape of the duct 8 is such that its central part 81 is recessed relative to its ends 82, so that there is a clearance between the nozzles 80 and the filtering material 5.

This guarantees more homogeneous diffusion, and filtering by the material 5 is improved since the throughway section of the nozzles 80 is not influenced by the structure of this material.

Figure 6 gives the time curves of gas flow rates from each of the chambers.

The maximum flow rate is attenuated compared with the rate emitted by a generator with a single combustion chamber, and lies close to the maximum rate reached with a dual-chamber generator in which the second chamber is initiated electrically at 15 ms.

Figure 7 gives the set of curves $P_{C1}$, $P_{C2}$ and P8 showing pressure changes in chambers $C_1$ and $C_2$ respectively, and in the duct 8. The shift in pressure peak is noted inside chamber $C_2$, and the pressure changes that are almost parallel in chambers $C_1$ and $C_2$ and in duct 8.

**Claims**

1. A pyrotechnic gas generator intended as a vehicle safety component, comprising a tubular envelope (1) closed at its ends and subdivided internally by two partitions (12, 13) that form three contiguous chambers, namely a first and a second combustion chambers ($C_1$, $C_2$), each containing at least one pyrotechnic charge (3, 4), provided longitudinally on either side of a diffusion chamber (D) communicating with at least one discharge opening (100) created in the wall (10) of the envelope (1), a filtration material (5) being provided in this chamber (D) at least opposite to the said discharge opening (100), the said partitions (3, 4) being traversed by at least one longitudinal orifice forming a nozzle (120, 130) that allows controlled passage of the hot gases generated by the combustion of the said pyrotechnic charge (3, 4) from the combustion chambers ($C_1$, $C_2$) to the diffusion chamber (D), these gases then being able to escape from the diffusion chamber (D), via the said discharge opening (100), in particular to inflate an airbag, only the first ($C_1$) of the said combustion chambers ($C_1$, $C_2$) is fitted with the means for initiation (2) of the said pyrotechnic charge (3) contained in it, wherein

   - the said diffusion chamber (D) contains a tubular conduit (8), the opposite ends of which communicate with the said longitudinal orifices (120, 130) forming a nozzle, the wall of this conduit (8) itself having at least one orifice forming a nozzle (80), which is never closed off, which connects its internal space with the internal space of the diffusion chamber, and that is opposite to the said filtration material (5), the generator being **characterized by** the fact that:

      - the nozzle (120) that separates the first combustion chamber ($C_1$) of the diffusion chamber (D) is closed off at the combustion chamber end ($C_1$) by an opercule (6) that gives way beyond a first predetermined value of pressure in this combustion chamber ($C_1$),
      - the nozzle (130) that separates the diffusion chamber (D) from the second combustion chamber ($C_2$) is closed off at the diffusion chamber end (D) by an opercule (7) that gives way beyond a second predetermined value of pressure in the said tubular conduit (8), this second value being greater than the first value;
      - the areas of the said nozzles (120, 130, 80) being dimensioned so that the nozzle (80) of the said conduit (8) controls the combustion of the charge (4) contained in the said second combustion chamber ($C_2$), when the said opercules (6, 7) have given way.

2. The generator according to claim 1, **characterised by** the fact that the respective areas of the said nozzles satisfy the following mathematical relation:

$$S1 < S3 < (S1+S2),$$

   wherein:

      - $S_1$ is the area of the nozzle (120) that separates the first combustion chamber ($C_1$) from the diffusion chamber (D);
      - $S_2$ is the area of the nozzle (130) that separates the diffusion chamber (D) from the second combustion chamber ($C_2$) ;
      - $S_3$ is the area of the nozzle (80) of the said tubular conduit (8).

3. The generator according to claim 1 or 2, wherein the said partitions (12, 13) are each traversed by a single nozzle (120, 130), **characterised by** the fact that the said tubular conduit (8) has a section that is slightly larger than that of the said nozzles (120, 130).

4. The generator according to any of the preceding claims, **characterised by** the fact that there exists some play between the nozzle (80) of the said tubular conduit (8) and the said filtration material (5).

**5.** The generator according to any of the preceding claims, wherein the said filtration material (5) is in the form of a tubular sleeve, **characterised by** the fact that the said conduit (8) is inserted by force into the said sleeve (5).

**Patentansprüche**

**1.** Pyrotechnischer Gaserzeuger, der als eine Fahrzeugsicherheitskomponente bestimmt ist, umfassend eine rohrförmige Umhüllung (1), die an ihren Enden geschlossen ist und innen durch zwei Abtrennungen (12, 13) unterteilt ist, die drei zusammenhängende Kammern bilden, nämlich eine erste und eine zweite Verbrennungskammer ($C_1$, $C_2$), wobei jede wenigstens eine pyrotechnische Ladung (3, 4) enthält, die in Längsrichtung auf beiden Seiten einer Diffusionskammer (D) bereitgestellt sind, die mit wenigstens einer Auslassöffnung (100) in Verbindung steht, die in der Wand (10) der Umhüllung (1) geschaffen ist, wobei ein Filtrationsmaterial (5) in dieser Kammer (D) wenigstens gegenüber der Auslassöffnung (100) bereitgestellt ist, wobei die Abtrennungen (3, 4) von wenigstens einer Längsöffnung durchquert werden, die eine Düse (120, 130) bildet, die einen kontrollierten Durchfluss der heißen, von der Verbrennung der pyrotechnischen Ladung (3, 4) erzeugten Gase aus den Verbrennungskammern ($C_1$, $C_2$) zur Diffusionskammer (D) erlauben, wobei diese Gase dann imstande sind, aus der Diffusionskammer (D) über die Entlassöffnung (100) zu entweichen, insbesondere um einen Airbag aufzublasen, wobei nur die erste ($C_1$) der Verbrennungskammern ($C_1$, $C_2$) mit dem Mittel zur Zündung (2) der in ihr enthaltenen pyrotechnischen Ladung (3) ausgestattet ist, wobei

- die Diffusionskammer (D) eine rohrförmige Leitung (8) enthält, deren entgegengesetzte Enden mit den Längsöffnungen (120, 130) in Verbindung stehen, die eine Düse bilden, wobei die Wand dieser Leitung (8) selbst wenigstens eine Öffnung aufweist, die eine Düse (80) bildet, die nie abgesperrt ist, die ihren Innenraum mit dem Innenraum der Diffusionskammer verbindet und die gegenüber dem Filtrationsmaterial (5) liegt, wobei der Erzeuger **dadurch gekennzeichnet ist, dass**:
- die Düse (120), die die erste Verbrennungskammer ($C_1$) von der Diffusionskammer (D) trennt, am Verbrennungskammerende ($C_1$) durch einen Bruchverschluss (6) abgesperrt ist, der oberhalb einem ersten vorbestimmten Druckwert in dieser Verbrennungskammer ($C_1$) nachgibt,
- die Düse (130), die die Diffusionskammer (D) von der zweiten Verbrennungskammer ($C_2$) trennt, am Diffusionskammerende (D) durch einen Bruchverschluss (7) abgesperrt ist, der oberhalb eines zweiten vorbestimmten Druckwert in der rohrförmigen Leitung (8) nachgibt, wobei dieser zweite Wert größer als der erste Wert ist;
- wobei die Flächen der Düsen (120, 130, 80) derart dimensioniert sind, dass die Düse (80) der Leitung (8) die Verbrennung der Ladung (4) steuert, die in der zweiten Verbrennungskammer ($C_2$) enthalten ist, wenn die Bruchverschlüsse (6, 7) nachgegeben haben.

**2.** Erzeuger gemäß Anspruch 1, **dadurch gekennzeichnet, dass** die jeweiligen Flächen der Düsen die folgende mathematische Relation erfüllen:

$$S1 < S3 < (S1+S2),$$

wobei:

- S1 die Fläche der Düse (120) ist, die die erste Verbrennungskammer ($C_1$) von der Diffusionskammer (D) trennt;
- S2 die Fläche der Düse (130) ist, die die Diffusionskammer (D) von der zweiten Verbrennungskammer ($C_2$) trennt;
- S3 die Fläche der Düse (80) der rohrförmigen Leitung (8) ist.

**3.** Erzeuger gemäß Anspruch 1 oder 2, wobei die Abtrennungen (12, 13) jeweils von einer einzelnen Düse (120, 130) durchquert werden, **dadurch gekennzeichnet, dass** die rohrförmige Leitung (8) einen Querschnitt aufweist, der leicht größer ist als der der Düsen (120, 130).

**4.** Erzeuger gemäß einem der vorhergehenden Ansprüche, **dadurch gekennzeichnet, dass** etwas Spiel zwischen der Düse (80) der rohrförmigen Leitung (8) und dem Filtrationsmaterial (5) existiert.

**5.** Erzeuger gemäß einem der vorhergehenden Ansprüche, wobei das Filtrationsmaterial (5) in der Form einer rohrförmigen Manschette ist, **dadurch gekennzeichnet, dass** die Leitung (8) durch Kraft in die Manschette (5) eingeführt wird.

## Revendications

**1.** Générateur pyrotechnique de gaz destiné à la sécurité automobile, comprenant une enveloppe tubulaire (1) fermée à ses extrémités et subdivisée intérieurement par deux cloisons (12, 13) qui délimitent trois chambres contiguës, à savoir une première et une deuxième chambres de combustion $(C_1, C_2)$ contenant chacune au moins une charge pyrotechnique (3, 4), disposées longitudinalement de part et d'autre d'une chambre de diffusion **(D)** communiquant avec au moins une ouverture de décharge (100) ménagée dans la paroi (10) de l'enveloppe (1), un matériau de filtration (5) étant disposé dans cette chambre (D) au moins en regard de ladite ouverture de décharge (100), lesdites cloisons (3, 4) étant traversées par au moins un orifice longitudinal formant tuyère (120, 130) qui autorise un passage contrôlé des gaz chauds générés par la combustion de ladite charge pyrotechnique (3, 4) des chambres de combustion $(C_1, C_2)$ vers la chambre de diffusion **(D)**, ces gaz pouvant ensuite s'échapper de la chambre de diffusion **(D)**, via ladite ouverture de décharge (100), notamment pour gonfler un coussin de protection gonflable, seule la première $(C_1)$ desdites chambres de combustion $(C_1, C_2)$ étant pourvue de moyens d'initiation (2) de ladite charge pyrotechnique (3) qui y est contenue, dans lequel :

- ladite chambre de diffusion **(D)** abrite un conduit tubulaire (8) dont les extrémités opposées communiquent avec lesdits orifices longitudinaux (120, 130) formant tuyère, la paroi de ce conduit (8) présentant elle-même au moins un orifice formant tuyère (80), qui n'est jamais obturé, qui fait communiquer son espace interne avec l'espace interne de la chambre de diffusion, et qui est en regard dudit matériau de filtration (5) ;
le générateur étant **caractérisé par le fait que** :
- la tuyère (120) qui sépare la première chambre de combustion $(C_1)$ de la chambre de diffusion **(D)** est obturée, côté chambre de combustion $(C_1)$, par un opercule (6) qui cède au-delà d'une première valeur prédéfinie de pression dans cette chambre de combustion $(C_1)$ ;
- la tuyère (130) qui sépare la chambre de diffusion **(D)** de la deuxième chambre de combustion $(C_2)$ est obturée, côté chambre de diffusion **(D)**, par un opercule (7) qui cède au-delà d'une seconde valeur prédéfinie de pression dans ledit conduit tubulaire (8), cette seconde valeur étant supérieure à la première valeur ;
- les aires desdites tuyères (120, 130, 80) étant dimensionnées de telle manière que la tuyère (80) dudit conduit (8) pilote la combustion de la charge (4) contenue dans ladite deuxième chambre de combustion $(C_2)$, quand lesdits opercules (6, 7) ont cédé.

**2.** Générateur selon la revendication 1, **caractérisé par le fait que** les aires respectives desdites tuyères répondent à la relation mathématique suivante :

$$S1 < S3 < S1 + S2,$$

dans laquelle :

- S1 est l'aire de la tuyère (120) qui sépare la première chambre de combustion $(C_1)$ de la chambre de diffusion **(D)** ;
- S2 est l'aire de la tuyère (130) qui sépare la chambre de diffusion **(D)** de la deuxième chambre de combustion $(C_2)$ ;
- S3 est l'aire de la tuyère (80) dudit conduit tubulaire (8).

**3.** Générateur selon la revendication 1 ou 2, dans lequel lesdites cloisons (12, 13) sont traversées chacune par une seule tuyère (120, 130), **caractérisé par le fait que** ledit conduit tubulaire (8) présente une section légèrement plus grande que celle desdites tuyères (120, 130).

**4.** Générateur selon l'une des revendications précédentes, **caractérisé par le fait qu'**il existe un jeu entre la tuyère (80) dudit conduit tubulaire (8) et ledit matériau de filtration (5).

**5.** Générateur selon l'une des revendications précédentes, dans lequel ledit matériau de filtration (5) a la forme d'un manchon tubulaire, **caractérisé par le fait que** ledit conduit (8) est emmanché à force dans ledit manchon (5).

**FIG. 1**

**FIG. 2**

**FIG. 3**

**FIG. 4**

**FIG. 5**

**FIG. 6**

Gas flow rate
(kmol.K/sec)

Time (ms)

**FIG. 7**

Pressure
(MPa)

Time (ms)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2760710 A
- FR 2877428 A
- FR 2890022 A
- US 20050098988 A